(19) **Europäisches Patentamt / European Patent Office / Office européen des brevets**

(11) **EP 1 652 197 B1**

(12) **EUROPÄISCHE PATENTSCHRIFT**

| | |
|---|---|
| (45) Veröffentlichungstag und Bekanntmachung des Hinweises auf die Patenterteilung:<br>**20.06.2007 Patentblatt 2007/25** | (51) Int Cl.:<br>**H01F 7/16** (2006.01)    **H01F 7/18** (2006.01)<br>**B60T 8/36** (2006.01) |
| (21) Anmeldenummer: **04766345.5** | (86) Internationale Anmeldenummer:<br>**PCT/EP2004/051636** |
| (22) Anmeldetag: **28.07.2004** | (87) Internationale Veröffentlichungsnummer:<br>**WO 2005/013295 (10.02.2005 Gazette 2005/06)** |

(54) **VERFAHREN ZUM ERMITTELN DES MAGNETISCHEN FLUSSES IN MINDESTENS EINEM ÜBER EINE TREIBERSTUFE ELEKTRISCH ANSTEUERBAREN MAGNETVENTIL**

METHOD FOR DETERMINING THE MAGNETIC FLUX IN AT LEAST ONE SOLENOID VALVE WHICH CAN BE ELECTRICALLY DRIVEN VIA A DRIVER STAGE

PROCEDE POUR DETERMINER LE FLUX MAGNETIQUE DANS AU MOINS UNE ELECTROVANNE POUVANT ETRE COMMANDEE ELECTRIQUEMENT PAR L'INTERMEDIAIRE D'UN ETAGE D'EXCITATION

| | |
|---|---|
| (84) Benannte Vertragsstaaten:<br>**DE FR** | • **JÖCKEL, Wolfgang**<br>**63179 Obertshausen (DE)**<br>• **SCHMITZ, Axel**<br>**65795 Hattersheim (DE)**<br>• **ENGELMANN, Mario**<br>**61449 Steinbach/Ts. (DE)** |
| (30) Priorität: **31.07.2003 DE 10335586**<br>**26.11.2003 DE 10355836**<br>**13.05.2004 DE 102004024058** | |
| (43) Veröffentlichungstag der Anmeldung:<br>**03.05.2006 Patentblatt 2006/18** | (74) Vertreter: **Brand, Markus**<br>**c/o Continental Teves AG & Co. oHG,**<br>**Guerickestrasse 7**<br>**60488 Frankfurt am Main (DE)** |
| (73) Patentinhaber: **Continental Teves AG & Co. oHG**<br>**60488 Frankfurt am Main (DE)** | (56) Entgegenhaltungen: |
| (72) Erfinder:<br>• **FEY, Wolfgang**<br>**65527 Niedernhausen (DE)**<br>• **HEINZ, Micha**<br>**64293 Darmstadt (DE)** | DE-A- 3 730 523    DE-A- 4 440 531<br>DE-A- 10 201 453    DE-A- 19 537 258<br>US-A- 4 450 427    US-A- 4 665 348 |

EP 1 652 197 B1

**Beschreibung**

Die Erfindung betrifft ein Verfahren und eine elektronische Schaltungsanordnung zum Ermitteln des magnetischen Flusses in mindestens einem über eine Treiberstufe elektrisch ansteuerbaren induktiven Bauelement, welches bevorzugt ein elektromagnetisch ansteuerbares Ventil oder Schieber (Stellgerät) ist sowie die Verwendung des Verfahrens und der Schaltungsanordnung in einem Verfahren zur Kalibrierung oder mechanischen Justage oder Berechnung eines Ansteuerstroms.

Es ist bekannt, in ABS-Steuergeräten für Kraftfahrzeugbremssysteme, aber auch in sogenannten Fahrdynamikreglern mit zusätzlichen Funktionen wie ESP etc., elektromagnetisch ansteuerbare analogisierte Ventile zur präzisen Regelung des Hydraulikdrucks einzusetzen.

In neueren Generationen von Hydraulikregelvorrichtungen werden sogenannte Analog/Digital-Ventile eingesetzt. Ein Analog/Digitalventil ist ein schaltendes Stellgerät, welches so betrieben wird, dass dieses analoge Regeleigenschaften besitzt. Dieses Ventil ist so konstruiert, dass es sowohl analog als auch digital betrieben werden kann.

Ein Verfahren zur Erkennung des Schaltpunktes des Ventils, insbesondere zur Bestimmung der Druckverhältnisse aus dem Stromverlauf des Ventilansteuerstromes, geht aus der EP 0 813 481 B1 (P 7565) hervor.

Wie aus einer parallel zur vorliegenden Internationalen Patentanmeldung eingereichten, nicht veröffentlichten Internationalen Patentanmeldung hervorgeht, lässt sich im Prinzip der Druckgradient oder Durchfluss G eines entsprechenden Druckregelventils in Abhängigkeit vom Differenzdruck über den Spulenstrom einstellen. Den eingesetzten Ventilen ist gemein, dass der Volumenstrom Q unter anderem vom Differenzstrom $\Delta p$ und vom Strom I abhängt. Allerdings ist diese Abhängigkeit (Kennlinie) normalerweise nicht genau bekannt, da fertigungsbedingte geringfügige individuelle bauliche Abweichungen der Ventile voneinander in einer Fertigungsserie bereits großen Einfluss auf den funktionalen Zusammenhang zwischen Durchfluss und Ansteuerstrom haben. Es ist somit für jedes Ventil individuell die Erstellung von Kennfeldern notwendig, was in der Regel eine aufwendige Kalibrierung im Werk oder am Bandende bei dem Kraftfahrzeughersteller zwingend erforderlich macht. Die ermittelten Kennlinien können dann, wie beispielsweise in der WO 01/98124 A1 (P 9896) beschrieben, zur Einstellung des gewünschten Druckgradienten verwendet werden.

Gemäß der vorstehend erwähnten unveröffentlichten Internationalen Patentanmeldung wird das Problem gelöst, dass die nach dem aus dem Stand der Technik bekannten Verfahren zur Ermittlung von Kennlinien immer noch eine unerwünschte Streuung aufweisen, so dass die Einstellung des gewünschten Druckgradienten nicht hinreichend genau erfolgen kann. Hierdurch wird das Regelverhalten des Gesamtsystems negativ beeinflusst. Eine Verbesserung würde sich dadurch ergeben, dass für jedes gefertigte Steuergerät beim Lieferant, oder am Band individuell eine Kalibrierung der Ventile vorgenommen wird. Hierzu können Kennlinien mittels einer geeigneten Messeinrichtung aufgenommen bzw. geeignete individuelle Kenngrößen $KG_{ind}$, die aus diesen Kennlinien gewonnen werden, an einen mit dem Steuergerät verbundenen oder verbindbaren Regler, insbesondere an einen darin enthaltenen elektronischen Speicher, übertragen werden. Dieses Verfahren ist jedoch ausgesprochen aufwändig und daher kostenintensiv.

Gemäß der besagten unveröffentlichten Patentanmeldung wird nun vorgeschlagen, ohne den Einsatz von zusätzlichen Sensorelementen oder elektronischen Bauelementen eine genauere Ansteuerung der weiter oben beschriebenen Hydraulikventile durchzuführen, wobei gemäß dem unveröffentlichten Verfahren die Istgröße für den Regelkreis von einer aufwändigen Schaltung zur Messung des zeitlichen Integrals über der zeitabhängigen Induktionsspannung zur Verfügung gestellt wird, welche ein Maß für den in dem induktiven Bauelement (Magnetspule) vorliegenden magnetischen Fluss ist.

Dokument DE 102 01 453 offenbart folgende Merkmale des Anspruchs 1: ein Verfahren zum Ermitteln des magnetischen Flusses in mindestens einem über eine elektronische Ansteuerung oder Treiberstufe mittels eines Ansteuersignals elektrisch ansteuerbaren induktiven Bauelement, insbesondere Aktor Bauelement, durch Auswertung und Einstellen eines vom Magnetfluss des induktiven Bauelements hervorgerufenen Messsignals mittels einer elektronischen Messeinrichtung, wobei das am induktiven Bauelement gemessene, magnetflussabhängige Messsignal aktiv durch die Messeinrichtung oder die elektronische Ansteuerung oder die Treiberstufe auf einem im wesentlichen konstanten wert gehalten wird und die Zeit bestimmt wird, innerhalb der das Ansteuersignal, das auf das induktive Bauelement unter Erzeugung des Messsignals einwirkt, anliegt.

Dokument US-A-4 665 348 offenbart folgende Merkmale des Anspruchs 5: eine elektronische Schaltungsanordnung zum Ermitteln des magnetischen Flusses, bzw. der Induktivität eines induktiven Aktur-Bauelements, mit einer Messeinrichtung, welche mindestens einen Signaleingang und einen Signalausgang umfaßt, wobei der Signaleingang elektrisch mit dem induktiven Bauelement oder einem Messelement verbunden ist und der Ausgang ein elektrisches Signal bereitstellt.

Ziel der vorliegenden Erfindung ist es, eine im obigen Verfahren verwendbare Schaltung zur Messung des Integrals einer elektrischen Größe zum Ermitteln des Magnetflusses in einem induktiven Bauelement zu vereinfachen und außerdem ein Verfahren anzugeben, nach dem besonders einfach eine Ermittlung des Integrals durchgeführt werden kann.

Diese Aufgabe wird gelöst durch das Verfahren gemäß Anspruch 1 und die elektronische Schaltungsanordnung gemäß Anspruch 5.

Nach dem Verfahren der Erfindung wird der magnetische Fluss in mindestens einem über eine elektronische Ansteuerung oder Treiberstufe mittels eines Ansteuersignals elektrisch ansteuerbaren induktiven Bauelement ermittelt. Nach dem Verfahren wird eine Auswertung und Einstellung eines vom Magnetfluss des induktiven Bauelements hervorgerufenen Messsignals mittels einer elektronischen Messeinrichtung vorgenommen. Dabei wird das am induktiven Bauelement gemessene, magnetflussabhängige Messsignal aktiv durch die Messeinrichtung oder die elektronische Ansteuerung oder die Treiberstufe auf einem im wesentlichen konstanten Wert gehalten. Außerdem wird dabei die Zeit $t_1$ bzw. $t_c$ bestimmt, innerhalb derer das Ansteuersignal, das auf das induktive Bauelement unter Erzeugung des Messsignals einwirkt, anliegt.

Das Messsignal kann ein oder mehrere Signal/e aus der Gruppe

- am induktiven Bauelement anliegende Spannung,
- Magnetfluss im induktiven, Bauelement oder
- Messsignal eines Messelements zur Bestimmung des Magnetflusses

sein.

Bei dem induktiven Bauelement handelt es sich bevorzugt um ein Aktor-Bauelement, welches insbesondere ein elektromagnetisch ansteuerbares Stellgerät ist, bei dem eine elektrisch ansteuerbare elektromagnetische Anordnung auf eine mechanische Einheit zum Einstellen eines Fluiddurchflusses einwirkt. Ganz besonders bevorzugt ist das Stellgerät ein hydraulisches oder pneumatisches Magnetventil.

Gemäß der Verwendung des erfindungsgemäßen Verfahrens in Anspruch 8 können zur Kalibrierung von Ventilen Kalibrierkennlinien oder Parameter zur Kalibrierung ohne die Verwendung von Druckbeaufschlagungen des Ventils ermittelt werden. Hierdurch entfällt beispielsweise die Druckbeaufschlagung während der Ermittlung der Kennlinien oder Parameter mittels einer pneumatischen oder hydraulischen Messanordnung, mit der gemäß dem bekannten Stand der Technik definierte Druckdifferenzen am zu messenden Ventil eingestellt werden. Hierdurch ergibt sich unter anderem der Vorteil, dass ein hergestelltes Ventil bzw. eine ganze Hydraulikeinheit nicht, wie dies bisher erforderlich war, in einem Prüfstand individuell unter Verwendung von definierten Drücken ausgemessen werden muss.

Gemäß einer weiteren bevorzugten Ausführungsform der Erfindung wird das induktive Bauelement mit einer oder mehreren zusätzlichen Messelementen induktiv gekoppelt, welche insbesondere Messspulen zum Ermitteln eines Messsignals zur Verfügung stellen. Hierdurch ist es ebenfalls möglich, die Induktivität oder eine andere entsprechende magnetische Größe aus der induktiven Spannung oder dem Verlauf des Abschaltstroms zu bestimmen.

Weitere bevorzugte Ausführungsformen ergeben sich aus den Unteransprüchen und der nachfolgenden Beschreibung von Ausführungsbeispielen an Hand von Figuren.

Es zeigen

Fig. 1    eine Anordnung eines Regelkreises zur Ventilkalibrierung mit einem Rechteckformer,

Fig. 2    eine Anordnung entsprechend Fig. 1, jedoch mit einer Messspule zur Messung des Magnetflusses,

Fig. 3    eine Darstellung des Verlaufs der Spannung und des Stroms bei einer typischen Spulenansteuerung eines Hydraulikventils und

Fig. 4    eine schematische Darstellung einer Schaltungsanordnung zur einfachen Messung der Zeitspanne zwischen der Zeit $t_0$ und $t_1$ (Rechteckformer) .

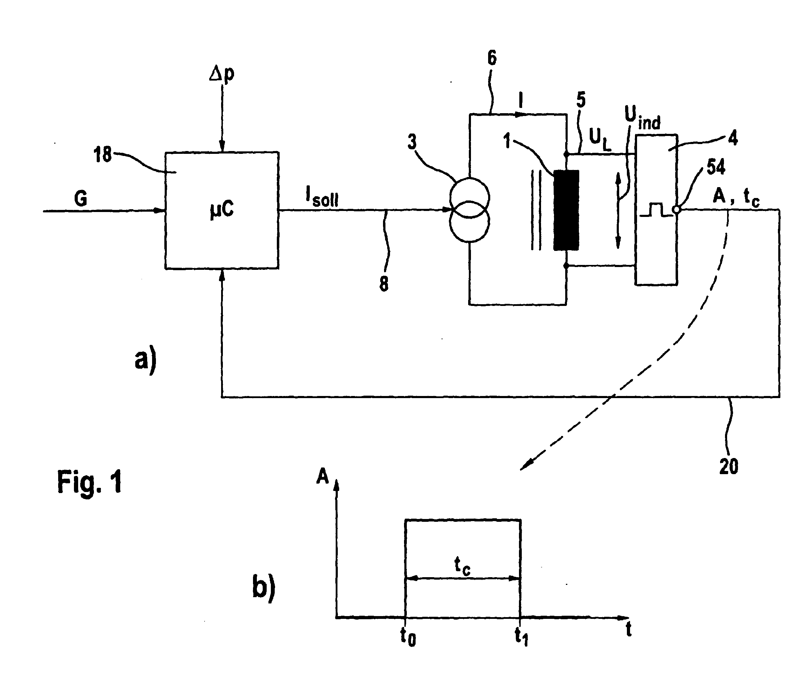

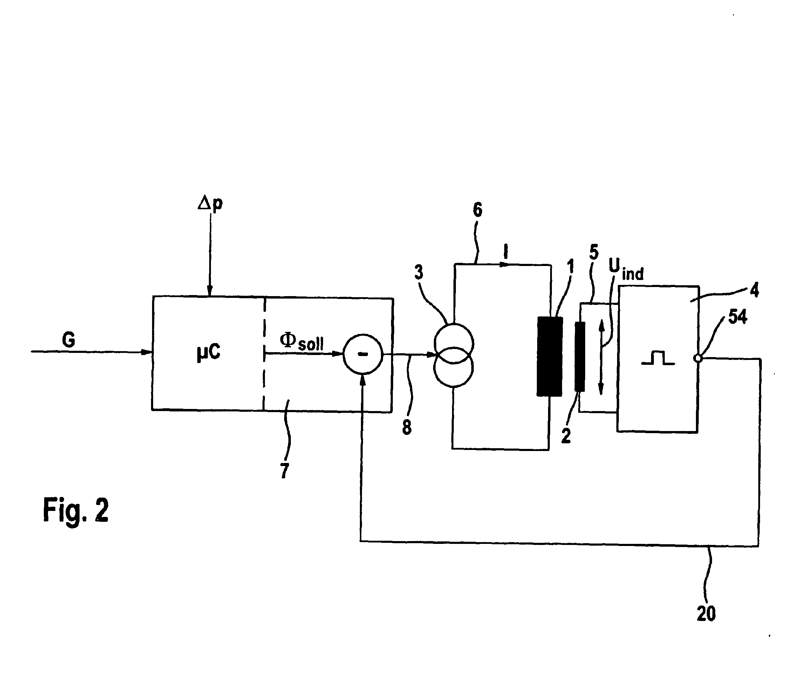

Die nachfolgend beschriebenen Beispiele werden in einer elektrohydraulischen Regelvorrichtung für Personenkraftfahrzeugbremsen angewendet. Üblicherweise umfassen entsprechende Regelvorrichtungen (EBS-Steuergerät) ein Reglergehäuse (ECU) mit einem Mikrocontrollersystem 18, wie in den Figuren 1 und 2 als Block dargestellt. Das nicht dargestellte Reglergehäuse ist mit einem ebenfalls nicht dargestellten hydraulischen Ventilblock (HCU) verbunden, welcher mehrere die Spulen 1 aufweisende Magnetventile zur Steuerung des Hydraulikflusses umfasst. Innerhalb des Regler befindet sich neben Mikrocontrollersystem 18 eine Ansteuerschaltung in Form mehrerer individuell ansteuerbarer Stromquellen 3, mit denen die Magnetventile über Ventilstrom I angesteuert werden können. Stromquellen 3 sind durch Endstufen realisiert, die den Strom pulsweitenmoduliert einstellen. Mit den Klemmen der Spule 1 ist Rechteckformerschaltung 4 über elektrische Leitungen verbunden, mit der die bei einer Stromänderung auftretende Induktionsspannung $U_{ind}$ gemessen werden kann.

Die schematische Darstellung in Fig. 2 zeigt einen ähnlichen Regelkreis wie Fig. 1, jedoch wird hier der magnetische Fluss innerhalb der Erregerspule 1 des Ventils mit einer Messspule 2 erfasst. Beim Einschalten und Abschalten der Ventilspule wird in der Messspule eine Spannung $U_{ind}$ induziert, deren Integral proportional zum vorhandenen magnetische Fluss ist. Über Leitung 20 wird das Zeitsignal $t_c$, welches proportional zum Magnetfluss ist, dem innerhalb des Mikrocontrollersystems abgebildeten Regler 7 als Regelgröße zugeführt.

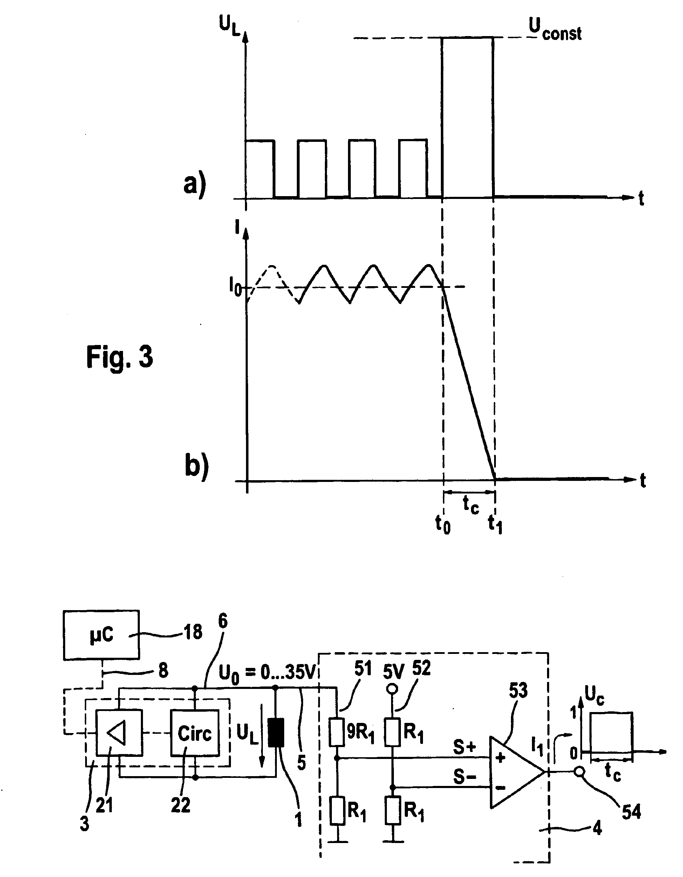

Im Beispiel in Fig. 3 wird eine Ventilspule im drucklosen Zustand nach Erreichen eines bestimmten Stromes $I_0$, bei dem man sicher von einem geschlossenen Ventil ausgehen kann, abgeschaltet. Mit einem modifizieren Ansteuertreiber 21, 22 (Fig. 4), wie er in der Patentanmeldung DE 102004017239.0 beschrieben ist, kann der Strom durch einen steuerbaren Halbleiterwiderstand 22 sehr schnell (innerhalb einer Zeit von weniger als 1 ms) abkommutiert werden, wie aus Fig. 3b ersichtlich ist. Dabei kann die Klemmspannung variabel und sehr genau eingestellt werden, anders als dies beispielsweise mit integrierten Zenerdioden der Fall wäre.

Der magnetische Fluss in Spule 1 von Fig. 1 induziert beim Abschalten der Ventilspule eine Spannung $U_L$ (Klemmspannung), so dass der Strom während des Abschaltens in einer Zeit $t_c$ auf etwa den Wert 0 abfällt. Der Spannungsverlauf an der Spule ist in Fig. 3a) dargestellt.

Der Spulenwiderstand $R_L$, die Spulenspannung $U_L$ (konstant eingeregelte Abkommutierspannung), sowie $I_0$ (Ventilstrom) sind dem elektronischen Regler (ECU) bekannt. Die Zeit $t_c$, die proportional zur Induktivität $L$ ist, wird mittels Rechteckformer 4 erfasst. Die Induktivität der Spule kann aus dem Stromverlauf während des Abkommutierens zwischen Zeitpunkt $t_0$ und Zeitpunkt $t_1$ bestimmt werden nach der Formel:

$$u_L = L \cdot \frac{di}{dt}$$

Durch die spezielle Ansteuerung, bei der $U_L$ zwischen der Zeit $t_0$ und $t_1$ konstant gehalten wird, wird das zur Bestimmung der Induktivität der Spule zu berechende zeitliche Integral über den Strom besonders einfach. Wenn der Strom nach dem Abkommutieren Null ist und der ohmsche Widerstand der Spule nicht berücksichtigt wird, kann die Induktivität der Ventilspule ermittelt werden durch

$$L = \frac{u_L \cdot t_c}{I_0} .$$

Unter Berücksichtigung des ohmschen Widerstandes $R_L$ kann die Induktivität nach der Gleichung

$$L = \frac{-t_c \cdot R_L}{\ln\left(\dfrac{u_L}{I_0 \cdot R_L + u_L}\right)}$$

bestimmt werden.

Durch die Rückführung des Signals 20 der Messeinrichtung 4 in Mikrocontroller 18 lässt sich eine Flusssteuerung oder Flussregelung realisieren, welche in Figuren 1 und 2 dargestellt ist. Der durch Ventilspule 1 strömende Ventilstrom I bildet darin die Stellgröße der Regelung.

Die Schaltungsanordnung in Fig. 4 zeigt einen mit Spule 1 verbundenen Rechteckformer 4, welcher durch Endstufe 21 angesteuert wird. Treiberstufe 3 umfasst neben Endstufe 21 außerdem eine aktive Rezirkulationsschaltung 22 zur schnellen Abkommutierung des Spulenstroms beim Abschalten des Magnetventils.

Rechteckformer 4 wird durch Spannungsteiler 51, bestehend aus Widerständen $R_1$ und $9R_1$, Spannungsteiler 52 sowie Komparator 53 gebildet.

Spannungsteiler 51 reduziert die hohen Spannungswerte $U_0$ am Signaleingang S+ des Komparators 53 um den Faktor 10, um mit normalen Logikpegeln arbeiten zu können. Spannungsteiler 52 erzeugt am Eingang S- des Komparators 53 eine Referenzspannung, die gleich der halben Logikversorgungsspannung ist. Komparator 53 bewertet somit die Differenz der Signale S+ und S-, wodurch ein geeignetes Rechtecksignal an Ausgang 54 erzeugt wird. Während einer an sich bekannten pulsweitenmodulierten Regelung (PWM) des Ventilstromes steigt die Spannung an $U_0$ auf maximal ca. 18 V, so dass der Eingang S+ niemals größer als 2.5 V wird. Ausgang 54 des Komparators bleibt somit auf "logisch 0". Zu Beginn einer Abkommutierung steigt die Spannung $U_0$ jedoch auf beispielsweise 35 V an, wodurch S+ mit dann 3.5 V deutlich höher als S- liegt. Die Folge davon ist ein Umschalten des Komparators auf "logisch 1", bis die Spannung $U_0$ entsprechend dem Ende der Abkommutierung wieder auf 0 V abfällt. Danach schaltet Komparator 53 wieder auf "logisch 0" um. Somit entspricht die Dauer der "logischen 1" an Ausgang 54 genau der Dauer $t_c$ der Abkommutierung. Das Komparatorsignal kann sehr zeitgenau von dem in Fig. 1 dargestellten Mikrocontroller erfasst und weiterverarbeitet werden.

Es ist außerdem möglich, mit Hilfe des Zusammenhangs $R_m = \dfrac{N^2}{L}$ den magnetischen Widerstand $R_M$ der Ventilspule zu bestimmen. In der angegebenen Formel ist $N$ die Windungszahl der Spule und L die Induktivität, welche aus dem Fluss entsprechend dem obigen erhalten wird.

Das beschriebene Vorgehen kann bei einem kleineren Startstrom $I_0$ auch für die Ermittlung des magnetischen Widerstands des geöffneten Ventils benutzt werden.

Mit Kenntnis von Federkraft und magnetischer Kraft (durch Bestimmen des magnetischen Widerstands) kann für eine anliegende hydraulische Kraft der einzustellende Strom für einen bestimmten Druckgradienten ermittelt werden.

**Patentansprüche**

1. Verfahren zum Ermitteln des magnetischen Flusses in mindestens einem über eine elektronische Ansteuerung oder Treiberstufe (3) mittels eines Ansteuersignals (6) elektrisch ansteuerbaren induktiven Bauelement, insbesondere Aktor-Bauelement, (1) durch Auswertung und Einstellen eines vom Magnetfluss des induktiven Bauelements hervorgerufenen Messsignals mittels einer elektronischen Messeinrichtung (4), wobei das am induktiven Bauelement gemessene, magnetflussabhängige Messsignal (5) aktiv durch die Messeinrichtung oder die elektronische Ansteuerung oder die Treiberstufe (3) auf einem im wesentlichen konstanten Wert gehalten wird, wobei ein Regler bzw. für jedes Bauelement ein Regler vorgesehen ist, dessen Stellgröße auf die elektronische Ansteuerung oder die Treiberstufe einwirkt, wobei das Ansteuersignal gebildet wird, und die Zeit ($t_1$, $t_c$) bestimmt wird, innerhalb der das Ansteuersignal, das auf das induktive Bauelement unter Erzeugung des Messsignals einwirkt, anliegt, wobei die Zeit oder das Zeitsignal (20) als Regelgröße für die Reglung verwendet wird und wobei das Messsignal ein oder mehrere Signal/e aus der Gruppe

   - am induktiven Bauelement anliegende Spannung,
   - Magnetfluss im induktiven Bauelement oder
   - Messsignal eines Messelements (2) zur Bestimmung des Magnetflusses ist.

2. Verfahren nach Anspruch 1, **dadurch gekennzeichnet, dass** die Zeit $t_c$ zwischen dem Anschaltzeitpunkt $t_0$ und dem.Abschaltzeitpunkt $t_1$ des Ansteuersignals (6) mittels einer analogen Schaltungsanordnung bestimmt wird, und die Zeit $t_c$ als elektrisches Signal (20) zur weiteren Verarbeitung zur Verfügung gestellt wird.

3. Verfahren nach mindestens einem der vorhergehenden Ansprüche, **dadurch gekennzeichnet, dass** das induktive Bauelement ein elektromagnetisches Stellgerät ist.

4. Verfahren nach mindestens einem der vorhergehenden Ansprüche, **dadurch gekennzeichnet, dass** das induktive Bauelement ein analog angesteuertes Magnetventil innerhalb einer elektrohydraulischen Anlage, insbesondere eines elektronischen Bremssystems, ist.

5. Elektronische Schaltungsanordnung zum Ermitteln des magnetischen Flusses bzw. der Induktivität eines induktiven Aktor-Bauelements, welche insbesondere das Verfahren gemäß mindestens einem der Ansprüche 1 bis 4 durchführt, **gekennzeichnet durch** eine Messeinrichtung (4), welche mindestens einen Signaleingang und einen Signalausgang (54) umfasst, wobei der Signaleingang elektrisch mit dem induktiven Bauelement (1) oder einem Messelement (2) verbunden ist und der Ausgang ein elektrisches Zeitsignal über die Zeit bereitstellt, die benötigt wurde, um die in dem induktiven Aktor-Bauelement gespeicherte magnetische Energie bei im wesentlichen konstanter Spannung vollständig abzuführen.

6. Schaltungsanordnung nach Anspruch 5, **dadurch gekennzeichnet, dass** der Signalausgang der Messeinrichtung (4) als Istwert einer Regelschaltung (7) zugeführt wird, deren Regelgröße (8) der Strom durch das induktive Bauelement ist.

7. Schaltungsanordnung nach Anspruch 5 oder 6, **dadurch gekennzeichnet, dass** das Aktor-Bauelement mittels eines pulsweitenmodulierten Stromtreibers (3) angesteuert wird.

8. Verwendung der Schaltungsanordnung gemäß mindestens einem der Ansprüche 5 bis 7 in einem Verfahren zur Kalibrierung oder mechanischen Justage oder Berechnung eines Ansteuerstroms, insbesondere des Öffnungsstroms, mindestens eines elektromagnetisch ansteuerbaren Stellgeräts zum Regeln des differenzdruckabhängigen Durchflusses G ($\Delta P$, I, KG) eines Fluids, bei dem das Maß der durch das Stellgerät hervorgerufenen Druckbeeinflussung durch die Stärke der elektrischen Ansteuerung des Stellgeräts im Voraus auch ohne die Verwendung von Drucksensoren bestimmt werden kann, in dem eine oder mehrere stellgerätespezifische Kennlinien oder Kenngrößen $KG_{ind}$ für das Stellgerät herangezogen werden, so dass vermittels dieser Kenngrößen ein Solldurchfluss G gezielt in Abhängigkeit von der Stromstärke I eingestellt werden kann, und bei dem die stellgerätespezifischen Kenngrößen ohne die Verwendung von Druckbeaufschlagungen (Differenzdruck $\Delta P = 0$) des Stellgeräts automatisch ermittelt werden.

**Claims**

1. Method for determining the magnetic flux in at least one inductive component, in particular actor component (1), which is electrically drivable by way of an electronic actuation or driver stage (3) by means of a drive signal (6), by evaluation and adjustment of a measuring signal induced by the magnetic flux of the inductive component using an electronic measuring device (4), and the magnetic-flux-responsive measuring signal (5) measured at the inductive component is actively maintained at a substantially constant value by means of the measuring device or the electronic actuation or the driver stage (3), wherein one controller or a controller for each component is provided, the correcting variable of which acts on the electronic actuation or the driver stage, with the drive signal being formed, and the time ($t_1$, $t_c$) is determined during which the drive signal is applied, which acts on the inductive component with production of the measuring signal, with the time or the time signal (20) being used as the controlled variable for the control, wherein the measuring signal is one signal or more signals out of the group of

- voltage prevailing at the inductive component,
- magnetic flux in the inductive component, or
- measuring signal of a measuring element (2) to determine the magnetic flux.

**2.** Method as claimed in claim 1, **characterized in that** the time $t_c$ between the enabling time $t_0$ and the disabling time $t_1$ of the drive signal (6) is determined by means of an analog circuit arrangement, and the time $t_c$ is made available as electric signal (20) for further processing operations.

**3.** Method as claimed in at least any one of the preceding claims, **characterized in that** the inductive component is an electromagnetic actuator.

**4.** Method as claimed in at least any one of the preceding claims, **characterized in that** the inductive component is an analog-controlled solenoid valve within an electrohydraulic system, in particular an electronic brake system.

**5.** Electronic circuit arrangement for determining the magnetic flux or the inductance of an inductive actor component which implements especially the method as claimed in at least any one of claims 1 to 4, **characterized by** a measuring device (4) which comprises at least one signal input and one signal output (54), with the signal input being connected electrically to the inductive component (1) or a measuring element (2), and with the output providing an electric time signal as a function of the time required to completely discharge the magnetic energy stored in the inductive actor component, at a substantially constant voltage.

**6.** Circuit arrangement as claimed in claim 5, **characterized in that** the signal output of the measuring device (4) is sent as an actual value to a control circuit (7), the controlled variable (8) of which is the current through the inductive component.

**7.** Circuit arrangement as claimed in claim 5 or 6, **characterized in that** the actor component is driven by means of a pulse-width-modulated current driver (3).

**8.** Implementation of the circuit arrangement according to at least any one of claims 5 to 7 in a method for the calibration or mechanical adjustment or calculation of a drive current, in particular the opening current, of at least one electromagnetically drivable actuator for controlling the flow $G(\Delta P, I, KG)$ of a fluid responsive to the differential pressure, in which the indicator of the influencing of the pressure caused by the actuator can be determined in advance by the intensity of the electric actuation of the actuator even without the use of pressure sensors, because one or more actuator-related characteristic curves or parameters $KG_{ind}$ for the actuator are taken into account so that by means of these parameters a nominal flow G can be adjusted in a defined fashion depending on the current intensity I, and in which the actuator-related parameters are established automatically without using pressurizations (differential pressure $\Delta P = 0$) of the actuator.

## Revendications

**1.** Procédé pour déterminer le flux magnétique dans au moins un composant inductif, en particulier un composant d'actionneur (1), pouvant être commandé électriquement à travers une commande électronique ou étage excitateur (3) au moyen d'un signal de commande, par évaluation et réglage d'un signal de mesure provoqué par le flux magnétique du composant inductif, au moyen d'un dispositif de mesure électronique (4), dans lequel le signal de mesure (5) dépendant du flux magnétique et mesuré sur le composant inductif, est maintenu activement à une valeur sensiblement constante par le dispositif de mesure ou la commande électronique ou l'étage excitateur (3), dans lequel est prévu un régulateur ou pour chaque composant un régulateur dont la grandeur de réglage agit sur la commande électronique ou l'étage excitateur, le signal de commande étant formé et le temps ($t_1$, $t_c$) étant déterminé à l'intérieur duquel s'applique le signal de commande qui agit sur le composant inductif en produisant le signal de mesure, dans lequel le temps ou le signal de temps (20) est utilisé comme grandeur de régulation pour la régulation et dans lequel le signal de mesure est un ou plusieurs signaux du groupe

- tension s'appliquant au composant inductif,
- flux magnétique dans le composant inductif ou
- signal de mesure d'un élément de mesure (2) pour déterminer le flux magnétique.

**2.** Procédé selon la revendication 1, **caractérisé en ce que** le temps ($t_c$) entre l'instant d'apparition ($t_0$) et l'instant de coupure ($t_1$) du signal de commande (6) est déterminé au moyen d'un circuit analogique, et le temps ($t_c$) est fourni sous la forme d'un signal électrique (20) pour traitement ultérieur.

3. Procédé selon l'une au moins des revendications précédentes, **caractérisé en ce que** le composant inductif est un appareil de réglage électromagnétique.

4. Procédé selon l'une au moins des revendications précédentes, **caractérisé en ce que** le composant inductif est une soupape magnétique commandée de manière analogique à l'intérieur d'une installation électrohydraulique, en particulier d'un système de freinage électronique.

5. Circuit électronique pour déterminer le flux magnétique ou l'inductance d'un composant d'actionneur inductif qui met en oeuvre en particulier le procédé selon l'une au moins des revendications 1 à 4, **caractérisé par** un dispositif de mesure (4) qui comprend au moins une entrée de signal et une sortie de signal (54), l'entrée de signal étant reliée électriquement au composant inductif (1) ou à un élément de mesure (2), et la sortie fournissant un signal de temps électrique relatif au temps qui a été nécessaire pour dissiper entièrement l'énergie magnétique accumulée dans le composant d'actionneur inductif à une tension sensiblement constante.

6. Circuit selon la revendication 5; **caractérisé en ce que** la sortie de signal du dispositif de mesure (4) est amenée en tant que valeur réelle à un circuit de régulation (7) dont la grandeur de régulation (8) est le courant qui circule à travers le composant inductif.

7. Circuit selon la revendication 5 ou 6, **caractérisé en ce que** le composant d'actionneur est commandé au moyen d'un excitateur de courant (3) modulé en largeur d'impulsion.

8. Utilisation du circuit selon l'une au moins des revendications 5 à 7 dans un procédé pour l'étalonnage ou l'ajustage mécanique ou le calcul d'un courant de commande, en particulier du courant d'ouverture, d'au moins un appareil de réglage à commande électromagnétique pour la régulation du débit G ($\Delta P$, I, KG) d'un fluide, dépendant de la pression différentielle, dans lequel la grandeur de l'action sur la pression, provoquée par l'appareil de réglage, peut être déterminée, à l'avance, par l'intensité de la commande électrique de l'appareil de réglage sans même l'utilisation de capteurs de pression, en utilisant une ou plusieurs courbes caractéristiques spécifiques de l'appareil de réglage ou des grandeurs caractéristiques $KG_{ind}$ pour l'appareil de réglage, de manière qu'au moyen de ces grandeurs caractéristiques il soit possible de régler de manière ciblée un débit de consigne G en fonction de l'intensité de courant I, et dans lequel les grandeurs caractéristiques spécifiques de l'appareil de réglage sont déterminées automatiquement sans l'utilisation de mises en pression (pression différentielle $\Delta P=0$) de l'appareil de réglage.

Fig. 1

**Fig. 2**

Fig. 3

**EP 1 652 197 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0813481 B1
- WO 0198124 A1
- DE 10201453
- US 4665348 A
- DE 102004017239